# EUROPÄISCHE PATENTANMELDUNG

(11) **EP 0 891 890 A2**
(43) Veröffentlichungstag der Anmeldung: **20.01.1999**
(21) Anmeldenummer: 98106647.5
(22) Anmeldetag: 09.04.1998
(51) Int. Cl.: B60P 1/00, B60P 3/00

(54) **Halterung**

(30) Priorität: 14.07.1997 DE 19730097
(71) Anmelder: Müllers & Backhaus GmbH & Co. KG, 41844 Wegberg-Arsbeck (DE)
(72) Erfinder: Backhaus, Josef, 41844 Wegberg-Arsbeck (DE)
(74) Vertreter: Castell, Klaus, Dr.-Ing.

(57) **Zusammenfassung**

Die Halterung besteht aus einer Grundfläche, die an einer Ladefläche befestigbar ist, und einer im wesentlichen senkrecht dazu angeordneten Stange, an der ein Halterahmen angeordnet ist, der um die Achse der Stange oder eine dazu parallele Achse schwenkbar ist.

Diese Halterung ermöglicht es, schwerere Gegenstände wie bspw. eine Saugvorrichtung hinter der Ladefläche eines Lastkraftwagens zu befestigen und zum Entleeren der Ladefläche einen Halterahmen mit der Saugvorrichtungen so zur Seite zu schwenken, daß die hintere Bordwand leicht geöffnet werden kann.

## Beschreibung

Die Erfindung betrifft eine Halterung.

Zur Befestigung von Gegenständen an Fahrzeugen werden Halterungen benötigt, die verhindern, daß beim Fahren des Fahrzeugs oder beim Bedienen der Gegenstände diese sich relativ zum Fahrzeug bewegen.

Bekannte Halterungen haben den Nachteil, daß die Gegenstände auf der Ladefläche plaziert werden und somit den zur Verfügung stehenden Stauraum verringern. Es sind jedoch auch Halterungen vorgeschlagen worden, um Gegenstände hinter oder unter der Ladefläche zu plazieren. Diese Halterungen sind meist aufwendig im Aufbau und in ihrer Bedienung.

Der Erfindung liegt die Aufgabe zugrunde, eine Halterung vorzuschlagen, die einfach im Aufbau ist und eine Anordnung von Gegenständen an Kraftfahrzeugen außerhalb der Ladefläche erlaubt.

Diese Aufgabe wird gelöst, durch eine Halterung mit einer Grundfläche, die an einer Ladefläche befestigbar ist und einer im wesentlichen senkrecht dazu angeordneten Stange, an der ein Halterahmen angeordnet ist, der um die Achse der Stange oder eine dazu parallele Achse schwenkbar ist.

Die erfindungsgemäße Halterung hat den Vorteil, daß ein Gegenstand, der auf dem Halterahmen befestigt ist, an verschiedene Seiten der Ladefläche eines Kraftfahrzeugs schwenkbar ist. Vorzugsweise wird die Grundfläche mit der Stange in einer Ecke der Ladefläche angeordnet, so daß der Halterahmen sowohl neben einer Seitenbordwand als auch hinter der hinteren Bordwand angeordnet werden kann. Wenn die hintere Bordwand geöffnet werden soll, wird der Halterahmen um die Achse so geschwenkt, daß er neben der seitlichen Bordwand steht, und wenn das Fahrzeug fährt oder eine seitliche Bordwand geöffnet werden soll, wird der Halterahmen und die Achse hinter die hintere Bordwand geschwenkt.

Die Halterung eignet sich beispielsweise sehr gut zum Befestigen eines Sauggebläses auf dem Halterahmen. Bei der Verwendung des Sauggebläses wird dann der Halterahmen hinter die hintere Bordwand geschwenkt und dort verriegelt. Dies ermöglicht es, mit dem Sauggebläse die gesamte Ladefläche zu beladen. Zum Abladen des aufgesaugten Gutes wird der Halterahmen von der hinteren Bordwand weggeschwenkt, so daß die hintere Bordwand geöffnet werden kann, um das aufgesaugte Gut von der Ladefläche zu entfernen. Die Befestigung der Halterung an der Ladefläche erlaubt es sogar, die gesamte Ladefläche zu kippen, so daß das aufgesaugte Gut ohne weitere manuelle Arbeit von der Ladefläche rutscht.

Vorteilhaft ist es, wenn die Grundfläche Bohrungen zur Befestigung der Grundfläche an der Ladefläche aufweist. Um auch schwere Gegenstände auf dem Halterahmen anzuordnen, ist eine gute Befestigung der Grundfläche an der Ladefläche sehr wichtig. Eine ausreichend dimensionierte Grundfläche mit darin angeordneten Bohrungen erlaubt eine stabile Befestigung der Stange an der Ladefläche.

Ein einfacher konstruktiver Aufbau sieht vor, daß die Stange einen waagerechten Arm aufweist, an dessen Ende die Achse angeordnet ist, um die der Halterahmen schwenkbar ist.

Um die auftretenden Hebelkräfte gering zu halten, wird vorgeschlagen, daß der waagerechte Arm direkt oberhalb einer Bordwand angeordnet ist.

Da die in der Praxis verwendeten Bordwände häufig verschiedene Höhen aufweisen, sieht eine vorteilhafte Ausgestaltungsform der Erfindung vor, daß der waagerechte Arm höhenverstellbar angeordnet ist. Dies erlaubt den Einsatz derselben Halterung für unterschiedliche Ladeflächen mit verschiedenen Bordwandhöhen.

Eine einfache Befestigung des Halterahmens am Arm wird erzielt, wenn am Ende des Armes eine Bohrung vorgesehen ist, die parallel zur Stange verläuft. Diese Bohrung kann dann als Lager für den Schwenkmechanismus des Halterahmens dienen.

Um die bei schwerer Beladung des Halterahmens auf die Stange wirkenden Kräfte abzufangen, wird vorgeschlagen, daß im oberen Bereich der Stange ein Stabilisierungsmittel, vorzugsweise eine Kette, befestigt ist. Während das eine Ende der Kette im oberen Bereich der Stange befestigt ist, wird das andere Ende der Kette an einer Stelle der Ladefläche so befestigt, daß auf die Stange wirkende Kräfte durch die Kette abgefangen werden.

Vorzugsweise weist der Halterahmen eine ebene Ablagefläche auf. Auf diese Fläche können verschiedene Vorrichtungen, wie bspw. eine Absaugvorrichtung montiert werden.

Zur besseren Befestigung des Halterahmens an der Ladefläche, wird vorgeschlagen, daß der Halterahmen in einem Abstand zur Stange eine weitere Befestigungseinrichtung aufweist, die eine Befestigung des Halterahmens an einer Bordwand ermöglicht. Diese weitere Befestigungseinrichtung erlaubt es, den Halterahmen in einer Position zu fixieren. Diese Befestigungseinrichtung ist lösbar ausgeführt, so daß der Halterahmen einerseits bspw. hinter der hinteren Bordwand fest befestigt werden kann und andererseits, bspw. zum Entleeren der Ladefläche, wegschwenkbar ist.

Da die Bordwände häufig verschiedene Höhen aufweisen, wird vorgeschlagen, daß auch die weitere Befestigungseinrichtung höhenverstellbar ist.

Um den Halterahmen in verschiedenen Positionen zu halten und insbesondere um ein Kippen der Ladefläche bei neben der Ladefläche angeordnetem Halterahmen zu ermöglichen, wird vorgeschlagen, daß am Halterahmen ein Befestigungsmittel, vorzugsweise eine Kette, befestigt ist.

Die erfindungsgemäße Halterung hat sich in der Praxis gut bewährt und ermöglicht es, mit einem einfachen Aufbau auch schwere Einrichtungen, wie bspw. ein Sauggebläse schwenkbar außerhalb der Ladefläche anzuordnen.

Ein Ausführungsbeispiel der erfindungsgemäßen Halterung ist in der Zeichnung dargestellt und wird im folgenden näher beschrieben.

Es zeigt:
- Figur 1: eine perspektivische Darstellung einer erfindungsgemäßen Halterung mit seitlich zu einer leicht gekippten Ladefläche angeordnetem Halterahmen und
- Figur 2: eine perspektivische Darstellung der Halterung nach Figur 1 in ihrer Position hinter der hinteren Bordwand einer Ladefläche.

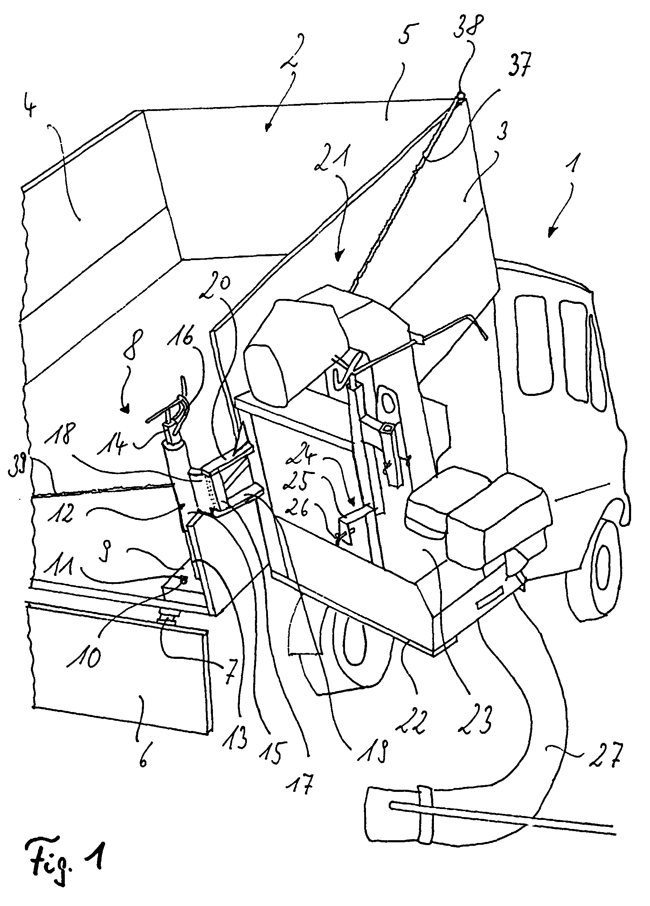

Die Figur 1 zeigt einen Lastkraftwagen 1 mit einer Ladefläche 2, die kippbar am Lastkraftwagen 1 befestigt ist. Diese Ladefläche 2 wird begrenzt von vier Bordwänden 3, 4, 5, 6, wobei die seitlichen Bördwände 3 und 4 mit Verbreiterungen ausgestattet sind und seitlich aufklappbar sind und die hintere Bordwand 6 ebenfalls über Schaniere 7 aufklappbar ausgeführt ist.

In der in Fahrtrichtung hinteren rechten Ecke der Ladefläche 2 ist die Halterung 8 auf der Ladefläche 2 befestigt. Die Halterung 8 weist dazu eine Grundfläche 9 auf, die mit vier Bohrungen 10 versehen ist. In den Bohrungen 10 sind Schrauben 11 angeordnet, mit denen die Grundfläche 9 an der Ladefläche 2 befestigt ist.

Aufder Grundfläche 9 ist in deren Mitte eine senkrechte Stange 12 angeschweißt, die im vorliegenden Fall ein rundes Profilrohr ist. Dieses Profilrohr kann jedoch auch mit anderen Querschnitten ausgeführt sein. Die Stange 12 besteht aus einem inneren Teil 13, auf dem mittels einer Spindel 14 höhenverstellbar ein äußeres Teil 15 angeordnet ist. Die Spindel 14 ist mittels einer Klammer 16 gegen unbeabsichtigtes Lösen gesichert.

An dem äußeren Teil 15 der Stange 12 ist ein sich waagerecht erstreckender Arm 17 angeordnet, der oberhalb der Bordwand 3 über die Ladefläche 2 hinausragt. Am Ende dieses Armes ist eine parallel zur Stange 12 verlaufende Bohrung 18 vorgesehen, in der eine Achse (nicht gezeigt) verläuft. An dieser Achse sind senkrecht zur Bohrung verlaufende Arme 19, 20 eines Halterahmens 21 befestigt. Dieser Halterahmen 21 hat eine ebene Ablagefläche 22, auf der eine Saugvorrichtung 23 befestigt ist.

In einem Abstand von etwa 1,5 m zur Stange 12 ist eine weitere höhenverstellbare Befestigungseinrichtung 24 vorgesehen. Diese Befestigungseinrichtung weist einen höhenverstellbaren U-förmigen Hacken 25 mit einer Flügelschraube 26 auf. Der Hacken 25 ist so angeordnet, daß bei einer Anordnung des Halterahmens 21 hinter der hinteren Bordwand 6 der Halterahmen mittels der Befestigungseinrichtung 24 an der hinteren Bordwand 6 befestigbar ist. Hierzu wird der U-förmige Hacken 25 über das obere Ende der Bordwand 6 gestülpt und durch Festziehen der Flügelschraube 26 wird der Halterahmen mit der hinteren Bordwand fest verbunden.

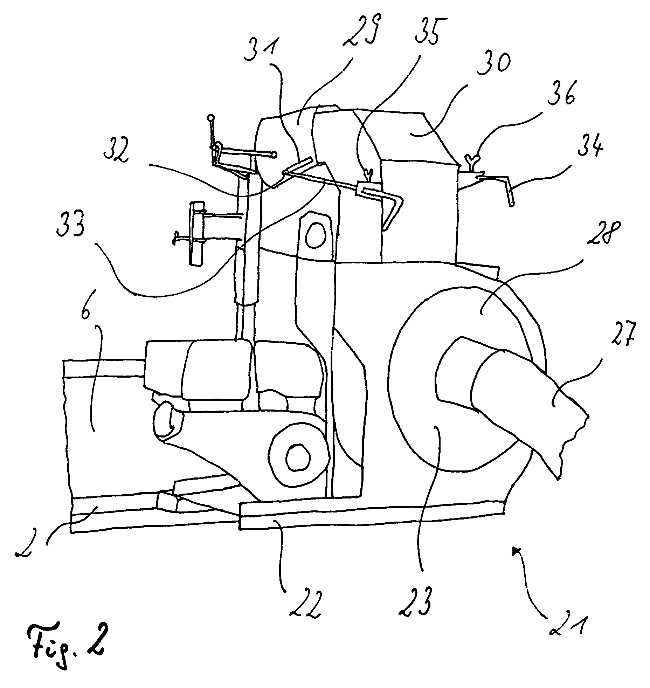

Während Figur 1 den Halterahmen in seiner weggeschwenkten Position zeigt, zeigt Figur 2 den Halterahmen in einer Position, in der er hinter der hochgeklappten hinteren Bordwand 6 positioniert ist. Die Ablagefläche 22 liegt dabei etwa in der Ebene der Ladefläche 2, so daß die Saugvorrichtung 23 hinter der Ladefläche 2 des Lastkraftwagens 1 angeordnet ist.

Bei der Verwendung der mit der Halterung 8 an der Ladefläche 2 befestigten Saugvorrichtung 23 wird mittels des Schlauches 27 bspw. Laub aufgesaugt. Das Sauggebläse 28 der Saugvorrichtung 23 fördert der Laub zu einem oberhalb der Saugvorrichtung 28 angeordneten Auswurftrichter 29, der bei Anordnung des Halterahmens 21 hinter der Ladefläche 2 auf die Ladefläche 2 zeigt. Somit wird mit dem Schlauch 27 aufgesaugtes Laub über den Auswurftrichter 29 auf die Ladefläche geworfen. Der Auswurftrichter 29 ist nach oben und seitwärts schwenkbar an einem Zuführrohr 30 befestigt. Zum Schwenken des Auswurftrichters 29 ist auf beiden Seiten des Trichters 29 je ein Arm 31 angeordnet, an dessen Ende über ein Kugelgelenk 32 eine Führungsstange 33 bzw. 34 angeordnet ist. Die Führungsstangen sind mit am Zuführrohr 30 befestigten Halterungen verstellbar gehalten und ihre Position kann mit Flügelschrauben 35, 36 fixiert werden. Dadurch ist es möglich, den Auswurftrichter in verschiedenen Positionen zu fixieren, so daß die gesamte Ladefläche 2 gleichmäßig mit Laub beladen werden kann.

Bei vollständig beladener Ladefläche fährt das Fahrzeug 1 zur Entladestelle. Dort wird zunächst die Flügelschraube 26 der Befestigungseinrichtung 24 gelöst und anschließend wird der U-förmige Hacken 25 nach oben verschoben, so daß der Halterahmen 21 um die Achse der Bohrung 18 entgegen dem Uhrzeigersinn geschwenkt werden kann. Zum Entladen wird der Halterahmen 21 zuerst möglichst weit zur seitlichen Bordwand 3 verschwenkt und dann mit einem Befestigungsmittel 37, im vorliegenden Fall einer Kette, an einer Ecke 38 der Bordwände 3 und 5 befestigt. Um eine zu starke Belastung der Stange 12 insbesondere beim Schwenken des Halterahmen 21 zu verhindern, ist im oberen Bereich der Stange 12 als Stabilisierungsmittel 39 eine Kette befestigt, deren anderes Ende an einem gegenüberliegenden Punkt der Ladefläche befestigt ist. Die Befestigungspunkte des Stabilisierungsmittels 39 und des Befestigungsmittels 37 sind so gewählt, daß auch bei einem Kippen der Ladefläche 2 keine übermäßigen Kräfte auf die Verbindung zwischen der Grundfläche 9 und der Ladefläche 2 wirken.

Somit ist es möglich, bei weggeschwenktem Halterahmen 21 die Ladefläche 2 so weit zu kippen, daß das geladene Laub nach hinten über die geöffnete Bordwand 6 abgeladen werden kann.

## Patentansprüche

1. Halterung
- mit einer Grundfläche (9), die an einer Ladefläche (2) befestigbar ist, und
- einer im wesentlichen senkrecht dazu angeordneten Stange (12),
- an der ein Halterahmen (21) angeordnet ist,
- der um die Achse der Stange (12) oder eine dazu parallele Achse schwenkbar ist.

2. Halterung nach Anspruch 1, ***dadurch gekennzeichnet, daß*** die Grundfläche (9) Bohrungen (10) zur Befestigung an der Ladefläche (2) aufweist.

3. Halterung nach einem der vorhergehenden Ansprüche, ***durch gekennzeichnet, daß*** die Stange (12) einen waagerechten Arm (17) aufweist, an dessen Ende die Achse angeordnet ist, um die der Halterahmen (21) schwenkbar ist.

4. Halterung nach Anspruch 3*, **durch gekennzeichnet, daß*** der waagerechte Arm (17) direkt oberhalb einer Bordwand (3) angeordnet ist.

5. Halterung nach einem der Ansprüche 3 bis 4, ***durch gekennzeichnet, daß*** der waagerechte Arm (17) höhenverstellbar angeordnet ist.

6. Halterung nach einem der Ansprüche 3 bis 5, ***dadurch gekennzeichnet, daß*** am Ende des Armes (17) eine Bohrung (18) vorgesehen ist, die parallel zur Stange (12) verläuft.

7. Halterung nach einem der vorhergehenden Ansprüche, ***dadurch gekennzeichnet, daß*** im oberen Bereich der Stange (12) ein Stabilisierungsmittel (39), vorzugsweise eine Kette, befestigt ist.

8. Halterung nach einem der vorhergehenden Ansprüche, ***dadurch gekennzeichnet, daß*** der Halterahmen (21) eine ebene Ablagefläche (21) aufweist.

9. Halterung nach einem der vorhergehenden Ansprüche, ***dadurch gekennzeichnet, daß*** der Halterahmen (21) in einem Abstand zur Stange (12) eine weitere Befestigungseinrichtung (24) zur lösbaren Befestigung des Halterahmens (21) an einer Bordwand (6) aufweist.

10. Halterung nach Anspruch 9, ***dadurch gekennzeichnet, daß*** die weitere Befestigungseinrichtung (24) höhenverstellbar ist.

11. Halterung nach einem der vorhergehenden Ansprüche, ***dadurch gekennzeichnet, daß*** am Halterahmen (21) ein Befestigungsmittel (37), vorzugsweise eine Kette, befestigt ist.

12. Halterung nach einem der vorhergehenden Ansprüche, ***dadurch gekennzeichnet, daß*** die Grundfläche (9) in einer hinteren Ecke der Ladefläche (2) angeordnet ist und der Halterahmen 21 im wesentlichen um diese Ecke der Ladefläche (2) in eine Position direkt hinter der Ladefläche (2) schwenkbar ist.
